# FASCICULE DE BREVET EUROPEEN

(11) **EP 1 052 476 B1**
(45) Date de publication et mention de la délivrance du brevet: **06.08.2008**
(21) Numéro de dépôt: 00401291.0
(22) Date de dépôt: 11.05.2000
(51) Int. Cl.: G01B 11/27, G02B 7/182, F41G 3/32

(54) **Procédé et dispositif pour détecter les erreurs d'harmonisation de l'axe d'un instrument optique**
Verfahren und Vorrichtung zum Feststellen von Fluchtungsfehlern eines optischen Instruments
Method and apparatus for detecting the alignment errors of an optical instrument

(30) Priorité: 12.05.1999 FR 9906100
(43) Date de publication de la demande: 15.11.2000
(73) Titulaire: Alcatel Lucent, 75008 Paris (FR)
(72) Inventeur: Maurel, Gilles, 06110 Le Cannet (FR); Cerutti-Maori, Guy Henri Abel, 06150 Cannes La Bocca (FR)
(74) Mandataire: Esselin, Sophie

(56) Documents cités:
- EP-A- 0 189 001
- EP-A- 0 440 990
- EP-A- 0 918 240
- GB-A- 2 326 047
- US-A- 3 989 947
- US-A- 4 741 618

## Description

La présente invention concerne un procédé et un dispositif pour détecter les erreurs d'harmonisation de l'axe optique d'un instrument optique par rapport à une direction de référence, notamment la direction de visée désirée. Elle se rapporte également à un tel instrument optique comportant un tel dispositif de détection.

On sait que les satellites d'observation et les récents télescopes spatiaux comportent de nombreux instruments qui doivent être pointés simultanément dans une même direction de référence, qui est elle-même déterminée de façon précise au moyen de viseurs stellaires.

Pour tenter d'éliminer les erreurs d'harmonisation --dues essentiellement aux vibrations et aux variations thermiques-- entre les axes optiques desdits instruments et la direction de référence, on a recours essentiellement aux trois actions suivantes, prises isolément ou en combinaison :
- rapprocher lesdits éléments optiques les uns des autres ;
- fixer lesdits instruments optiques sur une structure rigide, thermiquement très stable ; et
- assurer un contrôle thermique de ladite structure.

De plus, il est indispensable d'effectuer, si possible périodiquement, un contrôle de l'harmonisation ainsi obtenue.

Par ailleurs, les mesures effectuées par de tels instruments sont entachées d'erreur par de la lumière parasite, que l'on cherche à éliminer à l'aide de volumineux diaphragmes ou écrans disposés à l'entrée de la lumière dans lesdits instruments.

La présente invention a pour objet de remédier à ces inconvénients et d'améliorer la précision de visée d'instruments optiques vis-à-vis d'une direction de référence (par exemple donnée par un viseur stellaire), tout en augmentant l'efficacité de rejection de la lumière parasite desdits instruments et en rendant ceux-ci insensibles aux déformations mécaniques et thermiques.
US39899947 décrit un dispositif pour détecter des erreurs d'harmonisation de l'axe optique d'un instrument optique par rapport à une direction de référence.

A cette fin, selon l'invention, le procédé pour détecter les erreurs d'harmonisation de l'axe optique d'un instrument optique par rapport à une direction de référence, est remarquable :
- en ce qu'on matérialise ladite direction de référence par un faisceau lumineux de référence ; et
- en ce qu'on incorpore audit instrument optique :
   - un détecteur optoélectronique, disposé dans le plan focal dudit instrument optique ;
   - un système optique afocal, coaxial à l'axe optique dudit instrument optique, pourvu d'une pupille d'entrée réelle et formant de celle-ci une image également réelle ; et
   - un système invariant de translation d'axe optique disposé au voisinage de ladite image réelle de la pupille d'entrée, ledit système invariant recevant ledit faisceau lumineux de référence et engendrant, quelle que soit l'incidence de ce dernier faisceau, un faisceau lumineux de sortie, qui est parallèle audit faisceau de référence et qui est dirigé sur ledit détecteur optoélectronique depuis au moins approximativement le centre de ladite image réelle de la pupille d'entrée, ledit détecteur optoélectronique délivrant un signal électrique représentatif de l'excentricité, par rapport au point auquel l'axe optique dudit instrument traverse ledit plan focal, de la tache lumineuse formée par ledit faisceau de sortie dans ledit plan focal.

Ainsi, le dispositif conforme à la présente invention pour détecter lesdites erreurs d'harmonisation comporte :
- des moyens pour engendrer un faisceau lumineux de référence matérialisant ladite direction de référence ; et
- incorporés audit instrument optique :
   - un détecteur optoélectronique, disposé dans le plan focal dudit instrument optique ;
   - un système optique afocal, coaxial à l'axe optique dudit instrument optique, pourvu d'une pupille d'entrée réelle et formant de celle-ci une image également réelle ; et
   - un système invariant de translation d'axe optique, disposé au voisinage de ladite image réelle de la pupille d'entrée, ledit système invariant recevant ledit faisceau lumineux de référence et engendrant, quelle que soit l'incidence de ce dernier faisceau, un faisceau lumineux de sortie, qui est parallèle audit faisceau de référence et qui est dirigé sur ledit détecteur optoélectronique depuis au moins approximativement le centre de ladite image réelle de la pupille d'entrée.

On voit ainsi que, grâce à la présente invention :
- on crée des pupilles d'entrée et de sortie réelles au moyen dudit système optique afocal, ce qui permet de réduire la lumière parasite et, par conséquent, le volume des instruments optiques qui ne nécessitent plus des écrans et/ou diaphragmes de bafflage. On a vérifié que, dans le cas d'un viseur stellaire, la présente invention permet de diminuer d'un facteur de l'ordre de 1000 la lumière parasite par rapport à un instrument connu à écrans et/ou diaphragmes d'encombrement équivalent ;
- on peut injecter ledit faisceau lumineux de sortie au centre de ladite image réelle de la pupille d'entrée, de sorte qu'il n'en résulte aucune erreur de parallaxe et qu'il est ainsi possible d'injecter un faisceau de référence légèrement défocalisé ; et
- on forme sur ledit détecteur optoélectronique, disposé dans le plan focal dudit instrument optique, la tache lumineuse dudit faisceau lumineux de sortie, de sorte que, à chaque instant, la position de cette tache lumineuse sur ledit détecteur optoélectronique, par rapport au point auquel l'axe optique dudit instrument traverse ce dernier, est représentative de l'erreur d'harmonisation instantanée de l'axe dudit instrument optique par rapport à ladite direction de référence.

Ainsi, à la sortie dudit détecteur optoélectronique, qui est par exemple de type CCD, est disponible un signal électronique représentatif de ladite erreur d'harmonisation. Ce signal d'erreur d'harmonisation permet alors de corriger dynamiquement les erreurs de pointage dudit instrument optique. A cet effet, bien qu'il serait envisageable d'utiliser ledit signal d'erreur d'harmonisation pour asservir la position de l'axe optique dudit instrument sur ladite direction de référence, il est préférable de le mettre en oeuvre, par exemple de façon logicielle, pour corriger l'image de la scène vue par ledit instrument optique en la recentrant sur ledit faisceau lumineux de sortie.

De façon connue, l'image de la scène vue par l'instrument optique et formée par ledit détecteur optoélectronique se présente sous la forme d'une succession de trames. Aussi, pour obtenir un signal d'erreur d'harmonisation particulièrement distinct à la sortie dudit détecteur optoélectronique, on utilise un faisceau lumineux de référence impulsionnel et :
- soit on adresse audit détecteur optoélectronique une impulsion de faisceau lumineux de référence pendant certaines premières trames d'image et pas pendant d'autres secondes trames d'image (par exemple une trame sur deux) et on soustrait à chaque fois une seconde trame d'image d'une première trame d'image, de sorte que l'image de différence ne comporte que la trace dudit faisceau lumineux de sortie, la scène vue par l'instrument optique et le bruit parasite étant éliminés par cette soustraction. On obtient ainsi uniquement l'information d'erreur d'harmonisation entre l'axe de l'appareil optique et la direction de référence ;
- soit on adresse audit détecteur optoélectronique des impulsions lumineuses très courtes, par exemple 1000 fois plus courtes que les trames d'image, ces impulsions étant intercalées entre ces dernières trames d'image. Ainsi, l'observation de la scène vue par l'instrument optique n'est pas perturbée et on obtient une bonne rejection du bruit de fond de ladite scène.

Le faisceau lumineux de référence peut être de toute nature et être collimaté ou non. On remarquera que le choix de la longueur d'onde du faisceau de référence permet d'obtenir, compte tenu des aberrations chromatiques de l'optique de l'instrument, une tache image légèrement défocalisée si cela est nécessaire.

Selon une première forme de mise en oeuvre, la section transversale dudit faisceau de sortie est du même ordre de grandeur que l'aire de la face sensible de chacun des éléments photosensibles individuels constituant ledit détecteur optoélectronique et celui-ci présente la structure d'une matrice dans laquelle lesdits éléments photosensibles sont disposés en lignes et en colonnes. Dans ce cas, notamment, il est particulièrement avantageux que ledit faisceau de référence soit un faisceau laser.

En variante, la section transversale dudit faisceau de sortie peut être grande par rapport à l'aire de la face sensible de chacun des éléments photosensibles individuels constituant ledit détecteur optoélectronique, ledit faisceau de sortie forme l'image d'une mire dans ledit plan focal et le détecteur optoélectronique comporte au moins une barrette de tels éléments photosensibles.

Il est alors particulièrement avantageux que ladite mire comporte au moins deux tronçons rectilignes, inclinés l'un par rapport à l'autre, ainsi que par rapport à ladite barrette.

De façon connue, ledit système optique afocal peut être réalisé avec des lentilles et/ou des miroirs concaves. Il est avantageux que son grandissement K soit supérieur à 1, par exemple égal à 3, car alors on réduit d'un facteur K les contraintes de réalisation dudit système invariant.

Avantageusement, ledit système invariant de translation d'axe optique comporte trois surfaces réfléchissantes agencées selon les faces internes d'un trièdre rectangle formant un coin de cube creux, deux desdites surfaces réfléchissantes étant disposées pour recevoir ledit faisceau lumineux de référence, tandis que la troisième desdites surfaces réfléchissantes est coupée par l'axe optique dudit instrument et est discosée pour adresser ledit faisceau lumineux de sortie audit détecteur optoélectronique.

Ainsi, il est possible de déporter ledit instrument optique par rapport audit faisceau lumineux de référence, sans perte de précision dans le pointage.

Pour permettre audit détecteur optoélectronique de recevoir aussi bien la scène observée par ledit instrument que ledit faisceau lumineux de référence, ladite troisième surface de référence est constituée par une lame à faces parallèles, traversée par les rayons lumineux provenant de ladite scène. On remarquera que ladite lame peut être de petite taille et est disposée dans un endroit thermiquement protégé, à l'intérieur dudit instrument, sans augmenter l'encombrement de ce dernier.

De préférence, ladite lame à faces parallèles est traitée pour augmenter sa réflectivité vis-à-vis dudit faisceau lumineux de référence.

Pour des raisons d'encombrement au voisinage dudit instrument optique, il peut être avantageux que lesdits moyens engendrant ledit faisceau lumineux de référence soient éloignés dudit instrument optique, par exemple à une distance de plusieurs mètres. Un tel éloignement est rendu possible par la structure même du dispositif conforme à la présente invention.

La présente invention concerne de plus un instrument optique dont l'axe optique doit être harmonisé avec une direction de référence, cet instrument comportant un dispositif de détection d'erreurs d'harmonisation tel que décrit ci-dessus.

Par ailleurs, on notera que, grâce à la présente invention :
- il est possible de diminuer les contraintes de dimensionnement, d'origine mécanique et thermique, dans le cas de l'harmonisation d'une pluralité d'axes de visée ;
- on peut augmenter la précision de pointage d'un ou de plusieurs axes optiques, ce qui est particulièrement avantageux dans le cas de viseurs stellaires ;
- le dispositif de détection est insensible aux défauts de positionnement dudit système invariant de translation d'axe optique ;
- on peut aligner le télescope d'un réseau interférométrique (à synthèse d'ouverture), ainsi que les différentes voies d'un laser de puissance, à la condition d'éclater ledit faisceau lumineux de référence en plusieurs faisceaux de référence ; et
- on peut recaler les centrales inertielles ou gyroscopiques et les gyrolasers par visée stellaire, en effectuant éventuellement plusieurs translations d'axe.

Les figures du dessin annexé feront bien comprendre comment l'invention peut être réalisée. Sur ces figures, des références identiques désignent des éléments semblables.
La figure 1 illustre schématiquement et partiellement un instrument optique pourvu du dispositif de détection d'erreurs d'harmonisation conforme à la présente invention.
La figure 2 est une perspective schématique du système invariant de translation d'axe optique faisant partie dudit dispositif de détection d'erreurs d'harmonisation.
Les figures 3 et 4 illustrent schématiquement deux modes de réalisation du détecteur optoélectronique disposé dans le plan focal dudit instrument optique.

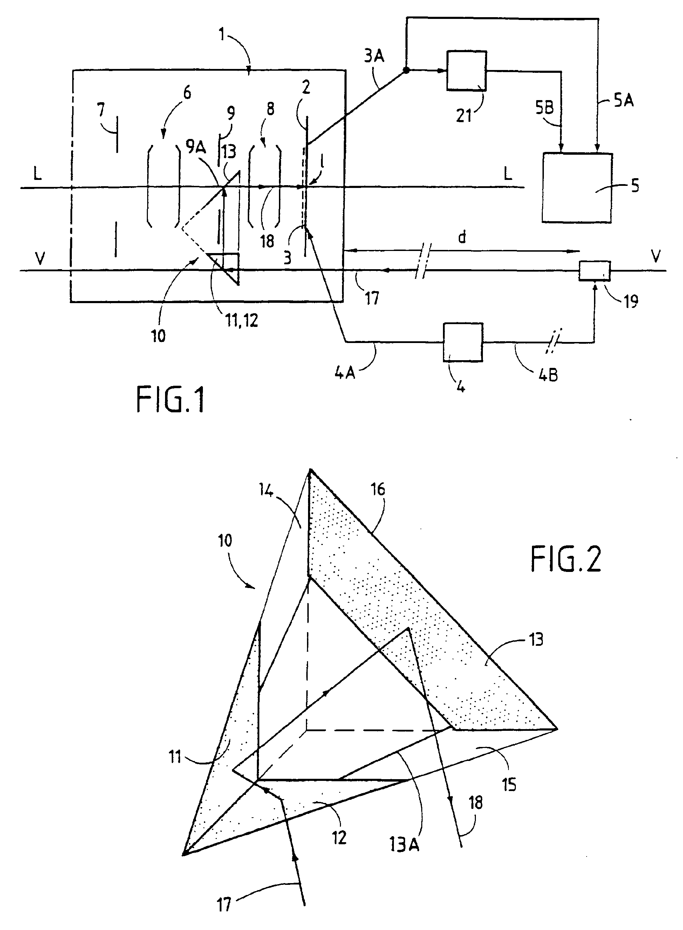

L'instrument optique 1, représenté de façon partielle et schématique sur la figure 1, est par un exemple du type télescope et il présente un axe optique L-L et un plan focal 2. Son demi-champ est par exemple égal à α degrés.

Cet instrument optique 1 comporte :
- un détecteur optoélectronique 3, par exemple de type CCD, qui est disposé dans le plan focal 2 et commandé par la sortie 4A du dispositif de commande séquentiel 4. La sortie 3A du détecteur 3 est reliée à l'entrée 5A d'un dispositif de formation et de traitement d'image 5 ;
- un système optique afocal 6, disposé coaxialement à l'axe optique L-L de l'instrument 1 en avant du plan focal 2 et pourvu d'une pupille réelle d'entrée 7. Le système optique afocal 6 peut être réalisé avec des lentilles et/ou des miroirs concaves et son grandissement K est de préférence supérieur à 1, par exemple égal à 3. Il donne de la pupille réelle d'entrée 7 une image réelle 9, de centre 9A, disposée entre ce système optique afocal 6 et l'objectif 8 ;
- un objectif 8, centré sur l'axe optique L-L et disposé entre le système optique afocal 6 et le détecteur optoélectronique 3. Cet objectif 8 présente donc un demi-champ β égal à K.α.

L'ensemble comprenant l'instrument 1, le détecteur 3, le système afocal 6 et l'objectif 8 est très rigide et est thermiquement stable. On prévoit à cet effet une structure en matériau carbone/carbone, en matériau connu commercialement sous le nom ZERODUR ou analogue.

Par ailleurs, l'instrument optique 1 comporte un système invariant de translation d'axe optique 10, par exemple du type représenté sur la figure 2. Sur cette dernière figure, on peut voir que le système 10 comporte trois surfaces réfléchissantes 11, 12 et 13 respectivement agencées sur les faces internes 14, 15 et 16 d'un trièdre rectangle formant un coin de cube creux. Les surfaces 11 et 12 sont reliées à la surface 13 par une surface intermédiaire 13A illustrée schématiquement. De façon connue, on sait qu'un faisceau lumineux incident 17 frappant l'une 12 des surfaces réfléchissantes 11 ou 12 est renvoyé, après une réflexion sur l'autre surface réfléchissante 11, en direction de la surface réfléchissante 13, qui le réfléchit en un faisceau lumineux sortant 18, parallèle audit faisceau incident 17, quelle que soit l'incidence de ce dernier sur les surfaces réfléchissantes 11 et 12.

Ce système invariant de translation d'axe optique 10 comporte une monture (non représentée) en un matériau mécaniquement et thermiquement très stable (ZERODUR, silice, etc ...) pour maintenir rigidement ensemble lesdites surfaces réfléchissantes 11, 12 et 13. Il est inséré dans l'instrument d'optique 1 au niveau de l'image réelle 9 de la pupille réelle d'entrée 7 du système optique afocal 6, ladite surface réfléchissante 13, réalisée sous la forme d'une lame à faces parallèles, coupant à 45° l'axe optique L-L de l'instrument 1 et laissant passer les rayons lumineux traversant ce dernier pour permettre la formation, sur le détecteur 3, de l'image de la scène observée par l'instrument 1.

Les surfaces réfléchissantes 11 et 12 sont écartées de l'axe optique L-L et reçoivent le faisceau lumineux 17 provenant d'une source 19, éloignée d'une distance d, par exemple égale à plusieurs mètres. Ce faisceau lumineux 17 est émis selon l'axe V-V de ladite source 19, qui matérialise la direction de visée souhaitée pour l'axe L-L de l'instrument optique 1.

Ainsi, le système invariant 10 permet d'injecter, au moins approximativement à partir du centre 9A de la pupille 9 et à travers l'objectif 8, le faisceau sortant 18 parallèle au faisceau incident 17 sur le détecteur 3.

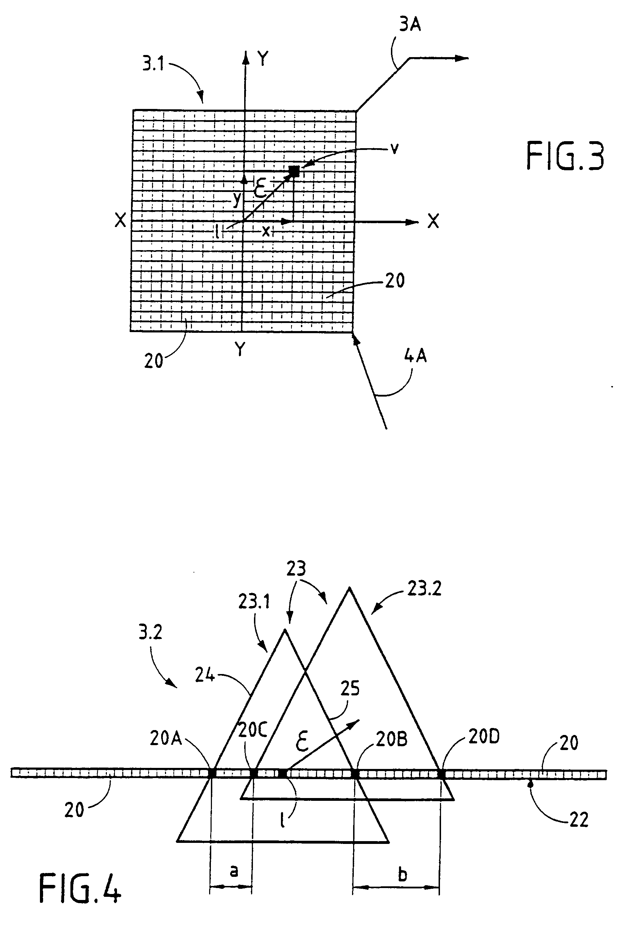

Sur la figure 3, on a illustré un mode de réalisation 3.1 du détecteur optoélectronique 3 présentant la structure d'une matrice dans laquelle les éléments photosensibles individuels constitutifs 20 sont disposés en lignes et en colonnes. Dans ce cas, il est avantageux que la section transversale des faisceaux lumineux 17 et 18, qui sont par exemple des faisceaux laser, soit du même ordre de grandeur que l'aire de la face sensible de chacun desdits éléments photosensibles 20, de sorte que la tache v du faisceau 18 sur le détecteur 3.1 n'illumine qu'un nombre limité desdits éléments photosensibles 20, nombre qui est de préférence égal à 1, mais en tout cas au plus égal à 4.

On conçoit aisément :
- que si l'axe optique L-L de l'instrument optique 1 est parfaitement parallèle à l'axe de visée V-V, le faisceau sortant 18 est parfaitement confondu avec ledit axe optique L-L, de sorte que la trace v du faisceau 18 sur le détecteur 3 est confondue avec le point ℓ auquel l'axe optique L-L coupe ledit détecteur 3 ; et
- que si l'axe optique L-L de l'instrument d'optique 1 n'est pas parfaitement parallèle à l'axe de visée V-V, le faisceau 18 n'est pas confondu avec l'axe optique L-L, de sorte que la trace v du faisceau 18 sur le détecteur 3 n'est pas confondue avec le point ℓ auquel l'axe optique L-L coupe ledit détecteur 3 (voir la figure 3).

Par suite, l'écart de position ε entre le point ℓ et la trace v est représentatif de l'erreur d'harmonisation de l'axe optique L-L par rapport à l'axe de visée V-V. Cet écart de position ε, détecté par le détecteur 3, par exemple sous la forme de ses coordonnées x et y dans un système d'axes rectangulaires X,X - Y,Y passant par le point ℓ, est disponible à la sortie 3A dudit détecteur 3 et est par exemple transmis à un dispositif de lecture d'erreur 21.

Dans le mode de réalisation 3.2 de la figure 4, le détecteur optoélectronique 3 est constitué d'au moins une barrette 22 d'éléments photosensibles individuels 20. Dans ce cas, la section transversale des faisceaux 17 et 18 peut être grande par rapport à l'aire de la face sensible de chacun des éléments photosensibles 20 constituant ledit détecteur optoélectronique 3.2, et le faisceau de sortie 18 peut former l'image d'une mire 23 dans le plan focal 2.

Comme l'illustre la figure 4, la mire 23 comporte au moins deux tronçons rectilignes 24 et 25, inclinés l'un par rapport à l'autre, ainsi que par rapport à la barrette 22.

Ainsi, de manière semblable à ce qui a été décrit ci-dessus :
- lorsque l'axe optique L-L de l'instrument optique 1 est parfaitement parallèle à l'axe de visée V-V, le faisceau sortant 18 est parfaitement confondu avec l'axe optique L-L, de sorte que la mire 23 (alors en position 23.1) est centrée sur le point ℓ auquel l'axe optique L-L coupe la barrette 22 et que ses tronçons rectilignes 24 et 25 illuminent respectivement les éléments photosensibles 20A et 20B de la barrette 22 ;
- en revanche, lorsque l'axe optique L-L n'est pas parfaitement parallèle à l'axe de visée V-V, le faisceau 18 n'est pas confondu avec l'axe optique L-L, de sorte que la mire 23 est dans la position excentrée 23.2, correspondant à l'erreur d'harmonisation ε. Dans cette position excentrée 23.2, les tronçons rectilignes 24 et 25 illuminent respectivement les éléments photosensibles 20C et 20D de la barrette 22. On comprendra aisément que les distances a et b, séparant respectivement les éléments 20A et 20C, d'une part, et les éléments 20B et 20D, d'autre part, permettent de connaître l'erreur d'harmonisation ε.

Dans un mode de réalisation particulier et non représenté, le détecteur optoélectronique 3.2 comporte, en plus de la barrette 22 d'éléments photosensibles individuels 20, une seconde barrette, non représentée, semblable à la barrette 20 et parallèle à cette dernière. On peut ainsi obtenir, à partir des distances a et b des deux barrettes, en plus des informations précitées, une information de roulis représentative d'une rotation autour de l'axe optique, concernant l'erreur d'harmonisation.

Ainsi, quel que soit le mode de réalisation 3.1 ou 3.2 du détecteur 3, celui-ci peut donner à sa sortie 3A un signal électrique représentatif de' l'erreur d'harmonisation ε. Ce signal d'erreur est adressé au dispositif de lecture 21, qui le transmet à une entrée 5B du dispositif 5, dans lequel l'image de la scène vue par l'instant 1 et formée par ledit détecteur optoélectronique 3, peut être corrigée de ladite erreur d'harmonisation.

Le détecteur 3 délivre donc à sa sortie 3A, d'une part l'image électronique de la scène vue par l'instrument 1 et, d'autre part, le signal électrique d'erreur d'harmonisation ε. Puisque, de façon connue, l'image de la scène vue par ledit instrument optique et formée par ledit détecteur optoélectronique 3 se présente sous la forme d'une succession de trames, il est avantageux de synchroniser le fonctionnement de la source 19, alors du type impulsionnel, sur le dispositif de commande séquentiel 4 du détecteur 3, afin de permettre d'individualiser nettement ledit signal d'erreur ε par rapport à ladite image électronique. Une telle synchronisation, qui peut être obtenue par une liaison 4B entre le dispositif 4 et la source 19, peut s'effectuer selon deux processus différents. Dans le premier, ladite source impulsionnelle 19 adresse au détecteur électronique 3 une impulsion de faisceau lumineux de référence 17 pendant certaines premières trames d'image et pas pendant d'autres secondes trames d'images et, à chaque fois, pour obtenir ledit signal électrique d'erreur d'harmonisation ε sans fond ni bruit de fond, on forme, par exemple dans le dispositif 21, la différence entre une première et une seconde trames d'image. Selon le second processus, le dispositif 4 impose une durée très courte aux impulsions du faisceau lumineux de référence 17 et intercale chaque impulsion dudit faisceau lumineux de référence entre deux trames d'image.

Par ailleurs, la lame à faces parallèles 13, qui est transparente aux rayons lumineux issus de la scène observée par l'instrument 1, peut être traitée pour augmenter sa réflectivité vis-à-vis du faisceau lumineux de référence 17.

## Revendications

1. Procédé pour détecter les erreurs d'harmonisation de l'axe optique (L-L) d'un instrument optique (1) par rapport à une direction de référence (V-V), **caractérisé :**
- **en ce qu'**on matérialise ladite direction de référence (V-V) par un faisceau lumineux de référence (17) ; et
- **en ce qu'**on incorpore audit instrument optique (1) :
• un détecteur optoélectronique (3), disposé dans le plan focal (2) dudit instrument optique (1) ;
• un système optique afocal (6), coaxial à l'axe optique (L-L) dudit instrument optique (1), pourvu d'une pupille d'entrée réelle (7) et formant de celle-ci une image (9) également réelle ; et
• un système invariant de translation d'axe optique (10), disposé au' voisinage de ladite image réelle de la pupille d'entrée (9), ledit système invariant (10) recevant ledit faisceau lumineux de référence (17) et engendrant, quelle que soit l'incidence de ce dernier faisceau, un faisceau lumineux de sortie (18), qui est parallèle audit faisceau de référence (17) et qui est dirigé sur ledit détecteur optoélectronique (3) depuis approximativement le centre (9A) de ladite image réelle (9) de la pupille d'entrée, **caractérisé en ce que** ledit détecteur optoélectronique (3) délivrant un signal électrique représentatif de l'excentricité, par rapport au point ( I ) auquel l'axe optique (L-L) dudit instrument (1) traverse ledit plan focal (2), de la tache lumineuse (v ; 23) formée par ledit faisceau de sortie (18) dans ledit plan focal (2).

2. Procédé selon la revendication 1,
**caractérisé en ce qu'**on utilise ledit signal électrique pour corriger, au niveau (5) de l'image de la scène vue par ledit instrument optique (1) et formée par ledit détecteur optoélectronique (3), lesdites erreurs d'harmonisation.

3. Procédé selon l'une des revendications 1 ou 2, dans lequel l'image de la scène vue par ledit instrument optique (1) et formée par ledit détecteur optoélectronique (3) se présente sous la forme d'une succession de trames,
**caractérisé en ce que** ledit faisceau lumineux de référence (17) est impulsionnel, **en ce qu'**on adresse audit détecteur optoélectronique (3) une impulsion de faisceau lumineux de référence (17) pendant certaines premières trames d'image et pas pendant d'autres secondes trames d'image et **en ce que**, à chaque fois, pour obtenir ledit signal électrique, on forme la différence entre une première trame et une seconde trame.

4. Procédé selon l'une des revendications 1 ou 2, dans lequel l'image de la scène vue par ledit instrument optique (1) et formée par ledit détecteur optoélectronique (3) se présente sous la forme d'une succession de trames,
**caractérisé en ce que** ledit faisceau lumineux de référence (17) est impulsionnel, **en ce que** la durée des impulsions dudit faisceau lumineux de référence (17) est très courte par rapport à la durée desdites trames d'image et **en ce qu'**on intercale chaque impulsion dudit faisceau lumineux de référence (17) entre deux trames d'image.

5. Procédé selon l'une des revendications 1 à 4,
**caractérisé en ce que** la section transversale dudit faisceau de sortie (18) est du même ordre de grandeur que l'aire de la face sensible de chacun des éléments photosensibles individuels (20) constituant ledit détecteur optoélectronique et **en ce que** ledit détecteur optoélectronique présente la structure d'une matrice (3.1) dans laquelle lesdits éléments photosensibles (20) sont disposés en lignes et en colonnes.

6. Procédé selon l'une des revendications 1 à 5,
**caractérisé en ce que** ledit faisceau de référence (17) est un faisceau laser.

7. Procédé selon l'une des revendications 1 à 4
**caractérisé en ce que** la section transversale dudit faisceau de sortie (18) est grande par rapport à l'aire de la face sensible de chacun des éléments photosensibles individuels (20) constituant ledit détecteur optoélectronique, **en ce que** ledit faisceau de sortie (18) forme l'image d'une mire (23) dans ledit plan focal (2) et en ce ledit détecteur optoélectronique comporte au moins une barrette (22) de tels éléments photosensibles

8. Procédé selon la revendication 7,
**caractérisé en ce que** ladite mire (23) comporte au moins deux tronçons rectilignes (24, 25), inclinés l'un par rapport à l'autre ainsi que par rapport à ladite (22).

9. Dispositif pour détecter les erreurs d'harmonisation de l'axe optique (L-L) d'un instrument optique spatial (1) par rapport à une direction de référence (V-V)
**caractérisé en ce qu'**il comporte :
- des moyens (19) pour engendre faisceau lumineux de référence (17) matérialisant ladite direction de référence (V-V) ; et
- incorporés audit instrument optique (1) :
. un détecteur optoélectronique (3), disposé dans le plan focal (2) dudit instrument optique (1) ;
. un systéme optique afocal (6), coaxial à l'axe optique (L-L) dudit instrument optique (1), pourvu d'une pupille d'entrée réelle (7) et formant de celle-ci une image également réelle (9) ; et
. un système invariant de translation d'axe optique (10), disposé au voisinage de ladite image réelle (9) de la pupille d'entrée, ledit système invariant de translation d'axe optique (10), disposé au voisinage de ladite image réelle (9) de la pupille d'entrée, ledit système invariant recevant ledit faisceau lumineux de référence et engendrant, quelle que soit l'incidence de ce dernier faisceau, un faisceau lumineux de sortie (18), qui est parallèle audit faisceau de référence (17) et qui est dirigé sur ledit détecteur optoélectronique (3) depuis au moins approximativement le centre (9A) de ladite image réelle (9) de la pupille d'entrée, **caractérisé en ce que** ledit détecteur optoélectronique est agencé pour délivrer un signal électrique représentatif de l'excentricité, par rapport au point ( I ) auquel l'axe optique (L-L) dudit instrument (1) traverse ledit plan focal (2), de la tache lumineuse (v ; 23) formée par ledit faisceau de sortie (18) dans ledit plan focal (2).

10. Dispositif selon la revendication 9,
**caractérisé en ce que** ledit système optique afocal (6) présente un grandissement supérieur à 1.

11. Dispositif selon l'une des revendications 9 ou 10,
**caractérisé en ce que** ledit système (10) invariant comporte trois surfaces réfléchissantes (11, 12, 13) agencées selon les faces internes (14, 15, 16) d'un trièdre rectangle formant un coin de cube creux, deux (11, 12) desdites surfaces réfléchissantes étant disposées pour recevoir ledit fais-' ceau lumineux de référence (17), tandis que la troisième (13) desdites surfaces réfléchissantes est coupée par l'axe optique (L-L) dudit instrument (1) et est disposée pour adresser ledit faisceau lumineux de sortie (18) audit détecteur optoélectronique (3).

12. Dispositif selon la revendication 11,
**caractérisé en ce que** ladite troisième surface réfléchissante (13) est constituée par une lame à faces parallèles.

13. Dispositif selon la revendication 12,
**caractérisé en ce que** ladite lame à faces parallèles (13) est traitée pour augmenter sa réflectivité vis-à-vis dudit faisceau lumineux de référence (17).

14. Dispositif selon l'une des revendications 9 à 13,
**caractérisé en ce que** lesdits moyens (19) engendrant ledit faisceau lumineux de référence sont éloignés dudit instrument optique.

15. Dispositif selon la revendication 14,
**caractérisé en ce que** la distance (d) entre ledit instrument optique (1) et lesdits moyen (19) engendrent ledit faisceau lumineux de référence est égale à plusieurs mètres.

16. Instrument optique spatial dont l'axe optique (L-L) doit être harmonisé avec une direction de référence (V-V), **caractérisé en ce qu'**il comprend un dispositif pour détecter les erreurs d'harmonisation, selon la revendication 9.

17. Instrument optique selon la revendication 16,
**caractérisé en ce que** ledit dispositif pour détecter les erreurs d'harmonisation comporte les particularités spécifiées sous l'une quelconque des revendications 9 à 15.

## Claims

1. Method for detecting errors in harmonization of the optical axis (L-L) of an optical instrument (1) relative to a reference direction (V-V),
**characterized:**
- **in that** said reference direction (V-V) is materialized by a reference light beam (17); and
- **in that** said optical instrument (1) incorporates:
• an optoelectronic detector (3), disposed in the focal plane (2) of said optical instrument (1) ;
• an afocal optical system (6), coaxial with the optical axis (L-L) of said optical instrument (1), provided with a real entry pupil (7) and forming therefrom an image (9) that is also real; and
• an invariant optical axis translation system (10), disposed in the vicinity of said real image of the entry pupil (9), said invariant system (10) receiving said reference light beam (17) and, whatever the angle of incidence of the latter beam, generating an output light beam (18) that is parallel to said reference beam (17) and is directed onto said optoelectronic detector (3) from approximately the centre (9A) of said real image (9) of the entry pupil, **characterized in that** said optoelectronic detector (3) delivering an electrical signal representing the eccentricity, relative to the point (I) at which the optical axis (L-L) of said instrument (1) passes through said focal plane (2), of the light spot (v; 23) formed by said exit beam (18) in said focal plane (2).

2. Method according to Claim 1, **characterized in that** said electrical signal is used for correcting said harmonization errors, at the level (5) of the image of the scene viewed by said optical instrument (1) and formed by said optoelectronic detector (3).

3. Method according to either of Claims 1 or 2, wherein the image of the scene viewed by said optical instrument (1) and formed by said optoelectronic detector (3) takes the form of a succession of frames,
**characterized in that** said reference light beam (17) is pulsed, **in that** there is directed onto said optoelectronic detector (3) a pulse of the reference light beam (17) during certain first image frames and not during other second image frames, and **in that**, each time, to obtain said electrical signal, the difference between a first frame and a second frame is formed.

4. Method according to either of Claims 1 or 2, wherein the image of the scene viewed by said optical instrument (1) and formed by said optoelectronic detector (3) takes the form of a succession of frames,
**characterized in that** said reference light beam (17) is pulsed, **in that** the duration of the pulses of said reference light beam (17) is very short relative to the duration of said image frames, and **in that** each pulse of said reference light beam (17) is interleaved between two image frames.

5. Method according to any one of Claims 1 to 4,
**characterized in that** the cross section of said exit beam (18) is of the same order of magnitude as the area of the sensitive face of each of the individual photosensitive elements (20) constituting said optoelectronic detector and **in that** said optoelectronic detector has the structure of a matrix (3.1) in which said photosensitive elements (20) are disposed in rows and in columns.

6. Method according to any one of Claims 1 to 5,
**characterized in that** said reference beam (17) is a laser beam.

7. Method according to any one of Claims 1 to 4, **characterized in that** the cross section of said exit beam (18) is large relative to the area of the sensitive face of each of the individual photosensitive elements (20) constituting said optoelectronic detector, **in that** said exit beam (18) forms the image of a pattern (23) in said focal plane (2), and **in that** said optoelectronic detector includes at least one strip (22) of such photosensitive elements (20).

8. Method according to Claim 7, **characterized in that** said pattern (23) includes at least two rectilinear sections (24, 25) inclined relative to each other and relative to said strip (22).

9. Device for detecting errors in harmonizing the optical axis (L-L) of a spatial optical instrument (1) relative to a reference direction (V-V),
**characterized in that** it includes:
- means (19) for generating a reference light beam (17) materializing said reference direction (V-V); and
- incorporated in said optical instrument (1):
• an optoelectronic detector (3), disposed in the focal plane (2) of said optical instrument (1);
• an afocal optical system (6), coaxial with the optical axis (L-L) of said optical instrument (1), having a real entry pupil (7) and forming thereof an image (9) that is also real, and
• an invariant optical axis translation system (10), disposed in the vicinity of said real image (9) of the entry pupil, said invariant optical axis translation system (10), disposed in the vicinity of said real image (9) of the entry pupil, said invariant system receiving said reference light beam and generating, whatever the angle of incidence of the latter beam, an exit light beam (18) that is parallel to said reference beam (17) and is directed onto said optoelectronic detector (3) from at least approximately the centre (9A) of said real image (9) of the entry pupil,
**characterized in that** said optoelectronic detector is adapted to deliver an electrical signal representing the eccentricity relative to the point (I) at which the optical axis (L-L) of said instrument (1) passes through said focal plane (2) of the light spot (v; 23) formed by said exit beam (18) in said focal plane (2).

10. Device according to Claim 9, **characterized in that** said afocal optical system (6) has a magnification greater than 1.

11. Device according to either of Claims 9 or 10, **characterized in that** said invariant system (10) includes three reflective surfaces (11, 12, 13) arranged on the internal faces (14, 15, 16) of a rectangular trihedron forming a hollow cube corner, two reflective surfaces (11, 12) of said reflective surfaces being disposed to receive said reference light beam (17), while the third reflective surface (13) is intersected by the optical axis (L-L) of said instrument (1) and is disposed so as to direct said exit light beam (18) onto said optoelectronic detector (3).

12. Device according to Claim 11, **characterized in that** said third reflective surface (13) consists of a parallel sided plate.

13. Device according to Claim 12, **characterized in that** said parallel face plate (13) is treated to increase its reflectivity vis-à-vis said reference light beam (17).

14. Device according to any one of Claims 9 to 13, **characterized in that** said means (19) generating said reference light beam are far away from said optical instrument.

15. Device according to Claim 14, **characterized in that** the distance (d) between said optical instrument (1) and said means (19) generating said reference light beam is equal to several metres.

16. Spatial optical instrument the optical axis (L-L) whereof must be harmonized with a reference direction (V-V), **characterized in that** it comprises a device according to Claim 9 for detecting harmonization errors.

17. Optical instrument according to Claim 16, **characterized in that** said device for detecting harmonization errors has the features specified in any one of Claims 9 to 15.

## Patentansprüche

1. Verfahren zum Erfassen von Fluchtungsfehlern der optischen Achse (L-L) eines optischen Instruments (1) in Bezug auf eine Bezugsrichtung (V-V) , **dadurch gekennzeichnet:**
- **dass** man die Bezugsrichtung (V-V) durch einen Bezugslichtstrahl (17) materialisiert und
- **dass** man in das optische Instrument (1) Folgendes inkorporiert:
• einen optoelektronischen Detektor (3), der in der Brennebene des optischen Instruments (1) angeordnet ist;
• ein brennpunktloses optisches System (6), das zu der optischen Achse (L-L) des optischen Instruments (1) koaxial ist, versehen mit einer realen Eintrittspupille (7), und das von dieser ein ebenfalls reales Bild (9) bildet, und
• ein invariantes Verschiebungssystem (10) der optischen Achse, das in der Nähe des realen Bilds der Eintrittspupille (9) angeordnet ist, wobei das invariante System (10) den Bezugslichtstrahl (17) empfängt und ungeachtet des Einfallens dieses letzteren Strahls einen Ausgangslichtstrahl (18) erzeugt, der zu dem Bezugslichtstrahl (17) parallel und auf den optoelektronischen Detektor (3) ausgehend von in etwa der Mitte (9A) des realen Bilds (9) der Eintrittspupille gerichtet ist, **dadurch gekennzeichnet, dass** der optoelektronische Detektor (3) ein elektrisches Signal liefert, das für die Außermittigkeit in Bezug auf den Punkt (I), in dem die optische Achse (L-L) des Instruments (1) die Brennebene (2) des Lichtflecks (v; 23), der von dem Ausgangsstrahl (18) in der Brennebene (2) gebildet wird, durchquert, repräsentativ ist.

2. Verfahren nach Anspruch 1, **dadurch gekennzeichnet, dass** man das elektrische Signal verwendet, um auf dem Niveau (5) des Bilds der Szene, die von dem optischen Instrument (1) gesehen und von dem optoelektronischen Detektor (3) gebildet wird, die Fluchtungsfehler zu korrigieren.

3. Verfahren nach einem der Ansprüche 1 oder 2, bei dem das Bild der von dem optischen Element (1) gesehenen und von dem optoelektronischen Detektor (3) geformten Szene die Form einer Abfolge von Rahmen halt, **dadurch gekennzeichnet, dass** der Bezugslichtstrahl (17) impulsartig ist, dass man dem optoelektronischen Detektor (3) einen Impuls des Bezugslichtstrahls (17) während bestimmter erster Bildrahmen und während anderer zweiter Bildrahmen nicht übermittelt, und dass man jedes Mal zum Erzielen des elektrischen Signals den Unterschied zwischen einem ersten Rahmen und einem zweiten Rahmen bildet.

4. Verfahren nach einem der Ansprüche 1 oder 2, bei dem das Bild der von dem optischen Instrument (1) gesehenen und von dem optoelektronischen Detektor (3) gebildeten Szene die Form einer Abfolge von Rahmen hat, **dadurch gekennzeichnet, dass** der Bezugslichtstrahl (17) impulsartig ist, und dass die Dauer der Impulse des Besugslichtstrahls (17) im Vergleich zu der Dauer der Bildrahmen sehr kurz ist, und dass man jeden Impuls des Bezugslichtstrahls (17) zwischen zwei Bildrahmen einfügt.

5. Verfahren nach einem der Ansprüche 1 bis 4, **dadurch gekennzeichnet, dass** der Querschnitt des Ausgangsstrahls (18) in der gleichen Größenordnung liegt wie die Fläche der empfindlichen Seite jedes der einzelnen lichtempfindlichen Elemente (20), die den optoelektronischen Detektor bildet, und dass der optoelektronische Detektor den Aufbau einer matrix (3.1) aufweist, bei der die lichtempfindlichen Elemente (20) in Zeilen und Spalten angeordnet sind.

6. Verfahren nach einem der Ansprüche 1 bis 5, **dadurch gekennzeichnet, dass** der Bezugslichtstrahl (17) ein Laserstrahl ist.

7. Verfahren nach einem der Ansprüche 1 bis 4, **dadurch gekennzeichnet, dass** der Querschnitt des Ausgangsstrahls (18) im Vergleich zu der Fläche der empfindlichen Seite jedes der einzelnen lichtempfindlichen Elemente (20), die den optoelektronischen Detektor bilden, groß ist, dass der Ausgangsstrahl (18) das Bild eines Testbilds (23) in der Brennebene (2) bildet, und dass der optoelektronische Detektor mindestens eine Leiste (22) derartiger lichtempfindlicher Elemente (20) aufweist.

8. Verfahren nach Anspruch 7, **dadurch gekennzeichnet, dass** das Testbild (23) mindestens zwei geradlinige Abschnitte (24, 25) aufweist, die zueinander und zu der Leiste (22) geneigt sind.

9. Vorrichtung zum Erfassen der Fluchtungsfehler der optischen Achse (L-L) eines räumlich-optischen Instruments (1) in Bezug auf eine Besugsrichtung (V-V) , **dadurch gekennzeichnet, dass** sie Folgendes aufweist:
- Mittel (19) Zum Erzeugen eines Bezugslichtstrahls (17), der die Bezugsrichtung (V-V) materialisiert und
- in das optische Instrument (1) eingebaut:
• einen optoelektronischen Detektor (3), der in der Brennebene (2) des optischen Instruments (1) angeordnet ist;
• ein brennpunktloses optisches System (6), das zu der optischen Achse (L-L) des optischen Instruments (1) koaxial ist, das mit einer realen Eintrittspupille (7) versehen ist und von dieser ein ebenfalls reales Bild (9) bildet und
• ein invariantes Verschiebungssystem (10) der optischen Achse, das in der Nähe des realen Bilds (9) der Eintrittspupille angeordnet ist, wobei das invariante Verschiebungssystem (10) der optischen Achse, das in der Nähe des realen Bilds (9) der Eintrittspupille angeordnet ist, den Bezugslichtstrahl empfängt und ungeachtet des Einfallens dieses letzteren Strahls einen Ausgangslichtstrahl (18) erzeugt, der zu dem Bezugslichtstrahl (17) parallel und zu dem optoelektronischen Detektor (3) ausgehend von zumindest in etwa der Mitte (9A) des realen Bilds (9) der Eintrittspupille gerichtet ist, **dadurch gekennzeichnet, dass** der optoelektronische Detektor eingerichtet ist, um ein elektrisches Signal zu liefern, das für die Außermittigkeit in Bezug auf den Punkt (I), in dem die optische Achse (L-L) des Instruments (1) die Brennebene (2) des Lichtflecks (v; 23), der von dem Ausgangsstrahl (18) in der Brennebene (2) gebildet wird, durchquert, repräsentativ ist.

10. Vorrichtung nach Anspruch 9, **dadurch gekennzeichnet, dass** das brennpunktlose optische System (6) eine Vergrößerung größer als 1 aufweist.

11. Vorrichtung nach einem der Ansprüche 9 oder 10, **dadurch gekennzeichnet, dass** das invariante System (10) drei reflektierende Flächen (11, 12, 13) aufweist, die entlang der Innenseiten (14, 15, 16) eines Dreiflächenreflektors, der eine Ecke eines Hohlwürfels bildet, eingerichtet sind, wobei zwei (11, 12) der reflektierenden Flächen angeordnet sind, um den Bezugslichtstrahl (17) zu empfangen, während die dritte (13) der reflektierenden Flächen von der optischen Achse (L-L) des Instruments (1) geschnitten wird und angeordnet ist, um den Ausgangslichtstrahl (18) zu dem optoelektronischen Detektor (3) zu übermitteln.

12. Vorrichtung nach Anspruch 11, **dadurch gekennzeichnet, dass** die dritte reflektierende Fläche (13) aus einer Klinge mit parallelen Seiten besteht.

13. Vorrichtung nach Anspruch 12, **dadurch gekennzeichnet, dass** die Klinge mit parallelen Seiten (13) behandelt ist, um ihren Reflexionsgrad gegenüber dem Bezugslichtstrahl (17) zu erhöhen.

14. Vorrichtung nach einem der Ansprüche 9 bis 13, **dadurch gekennzeichnet, dass** die Mittel (19), die den Bezugslichtstrahl erzeugen, von dem optischen Instrument entfernt sind.

15. Vorrichtung nach Anspruch 14, **dadurch gekennzeichnet, dass** die Entfernung (d) zwischen dem optischen Instrument (1) und den Mitteln (19), die den Bezugslichtstrahl erzeugen, mehrere Meter beträgt.

16. Räumlich-optisches Instrument, dessen optische Achse (L-L) mit einer Bezugsrichtung (V-V) gefluchtet werden muss, **dadurch gekennzeichnet, dass** es eine Vorrichtung zum Erfassen der Fluchtungsfehler gemäß Anspruch 9 aufweist.

17. Optisches Instrument nach Anspruch 16, **dadurch gekennzeichnet, dass** die Vorrichtung zum Erfassen der Fluchtungsfehler die Besonderheiten aufweist, die in einem der Ansprüche 9 bis 15 spezifiziert sind.
